Europäisches Patentamt

European Patent Office

Office européen des brevets

(11) Publication number: **0 463 249 A1**

## EUROPEAN PATENT APPLICATION

(21) Application number: **90307077.9**

(22) Date of filing: **28.06.90**

(51) Int. Cl.5: **F16C 29/06**

(43) Date of publication of application:
**02.01.92 Bulletin 92/01**

(84) Designated Contracting States:
**AT BE CH DE DK ES FR GB GR IT LI LU NL SE**

(71) Applicant: **Fredericks, Conrad Erwin**
**9, Tavistock Terrace Upper Holloway**
**London N19 4BZ(GB)**

(72) Inventor: **Fredericks, Conrad Erwin**
**9, Tavistock Terrace Upper Holloway**
**London N19 4BZ(GB)**

(74) Representative: **Walter, Douglas Ernest et al**
**HASELTINE LAKE & CO. 28, Southampton**
**Buildings**
**London WC2A 1AT(GB)**

(54) **Ball bushing.**

(57) A linear bearing or bushing is provided in which "loaded" and "unloaded" or return ball channels are formed directly in the thickness of the shell or body of the bearing or bushing without the use of an initially separate ball guidance cage. Curved transfer channels 4 are formed in end caps of the bearing or bushing so as to interconnect the ends of pairs of the "loaded" and "unloaded" ball channels and each channel preferably has a conformity radius which is substantially 1.06 x the radius of each bearing ball which, in use, will be movably disposed therein. The ball channels are produced, during the formation of the bearing or bushing, by the use of a ball end or ball nose slot mill.

Fig.1.

This invention relates to ball bushings and is concerned with so-called radial and tangential ball bushings of the kind which are intended to facilitate the linear, rather than rotary, displacement of one item relative to another. Such ball bushings or shaft bearings are quite well known *per se* and a good example thereof can be found in GB-A-1574258 to which reference may be made for constructional details of such a bushing or bearing.

Although such bearings or bushings are commonly employed in, purely for example, the support of linearly displaceable machine tool parts and the like, their construction must be carried out very carefully if they are to be, as is required, long lasting and this inevitably makes them somewhat expensive. The principal difficulty in producing known bearings or bushings of this general kind is that they require an initially separate ball guidance cage but it has now been discovered that bearings or bushings of the kind under discussion, and that have the required durability, can be produced less expensively by employing a construction which omits a separate ball guidance cage. The present invention is based principally upon this development.

According to the invention, there is provided a linear bearing or bushing comprising a shell in which is formed a plurality of "loaded" ball channels and a plurality of spaced but parallel "unloaded" or return ball channels, the bearing or bushing also comprising end caps each of which exhibits a plurality of curved transfer channels interconnecting the ends of pairs of the "loaded" and "unloaded" ball channels.

For a better understanding of the invention, and to show how the same may be carried into effect, reference will now be made, by way of example, to the accompanying drawings, in which:-

Figure 1 is an internal end view of an end cap of one kind of linear bearing or bushing in accordance with the invention,

Figure 2 is a side elevation corresponding to Figure 1,

Figure 3 is an enlarged scrap view demonstrating the path followed by a cutter employed in forming the end cap of Figures 1 and 2,

Figure 4 is a view to the same enlarged scale as Figure 3, as seen in the direction indicated by an arrow IV in Figure 5, and

Figure 5 is a sectional view, to the same enlarged scale as Figures 3 and 4, showing one side of an end cap of the linear bearing or bushing and ways in which the transfer channels thereof are formed.

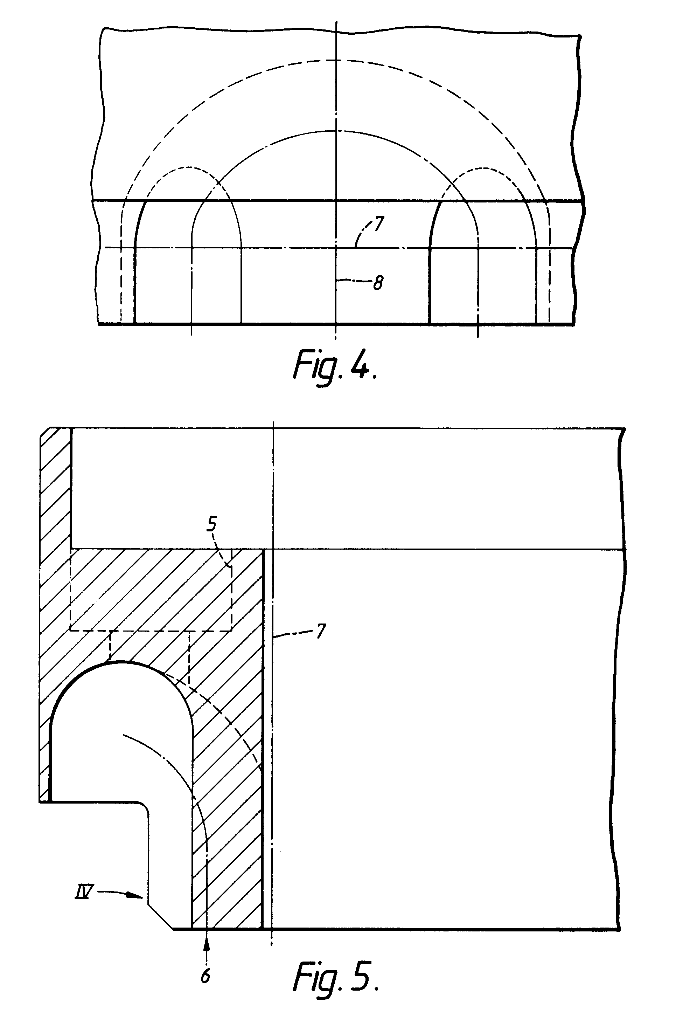

Referring to the accompanying drawings, those drawings show only one of two symmetrically opposite end caps of a circular cross-section linear bearing or bushing in accordance with the invention, it being unnecessary to illustrate the intervening body of the bearing since that body comprises an annular formation cylindrical shell formed from zinc, brass, steel, a polyamide or other synthetic plastics material a ceramic material or a cermet material, or from a combination of such materials, the "loaded" and "unloaded" or return ball channels being formed in that material by a simple drilling operation to produce channels that may conveniently, but not essentially, be similarly disposed to the channels that are formed for the same purposes as described in GB-A-1574258. It will immediately be apparent, however, that, in the previous document, the "loaded" and "unloaded" or return ball channels are formed in an initially separate ball guidance cage, the cage being formed by machining or moulding and finishing depending upon the particular material from which the cage is formed. In any case, the "loaded" and "unloaded" or return ball channels extend strictly parallel to the longitudinal axis (axis of linear displacement) of the bearing or bushing, the "loaded" channels opening internally through the body of the bearing or bushing so that the balls which they will contain in use abut against a shaft or other member. A line 1 can be seen in Figure 5 of the drawings and this line designates the outer curved surface of a shaft or the like with which, in use, the linear bearing or bushing will co-operate. Obviously, although Figure 5 illustrates only part of one of the end caps of the bearing or bushing, the shell or body thereof will, in use, be disposed immediately below the end cap of Figure 5 and the line 1 will continue downwardly into that body so that the bearing balls contained in the "loaded" channels will project internally through the wall of the body of the bearing or bushing, as they do through the material of the end cap, into bearing contact with the shaft or the like that exhibits the surface 1.

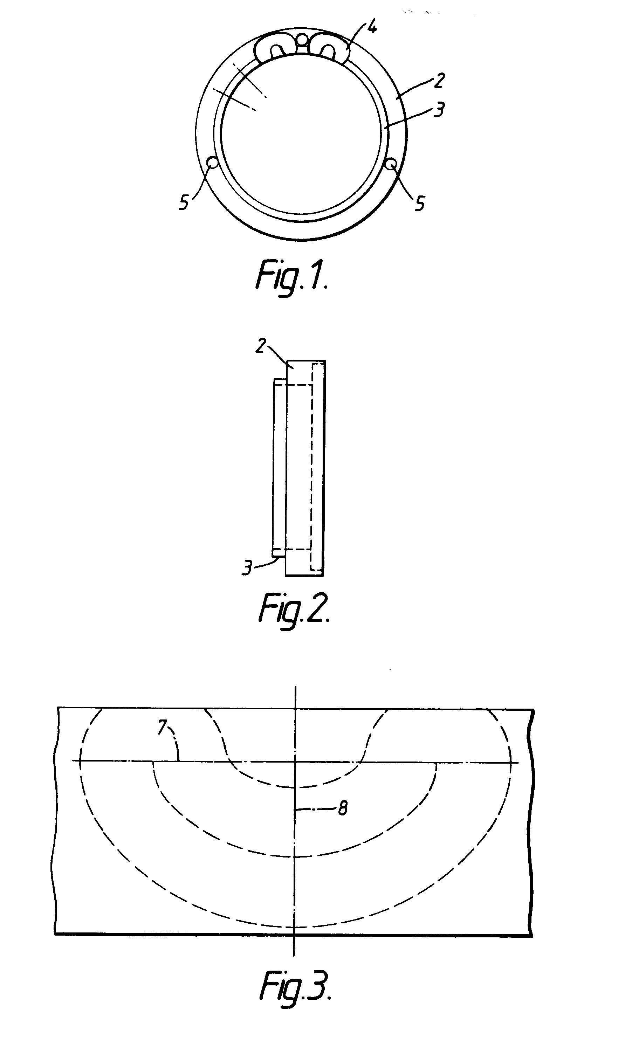

Figure 2 of the drawings is a side view of an end cap of a linear bearing or bushing in accordance with the invention which end cap may, for example, be a so-called 40 millimetre standard ball bush end cap which may conveniently, but not essentially, be formed as a zinc casting, it being remembered that other metallic and/or synthetic plastics and/or ceramic and/or cermet materials may be employed if desired and/or if appropriate. The end cap is stepped and has an outer portion 2 and an inner portion 3 of smaller diameter that cooperates with the shell or body (not shown) of the linear bearing or bushing. In the example that is being described, the outer portion 2 of the end cap has a diameter of 51.5 mm whereas the inner portion 3 thereof has a diameter which may vary between 45.8 and 45.9 mms depending upon the particular way in which the linear bearing or bushing is to be used. The different possibilities in this respect are discussed in GB-A-1574258. The end cap may have an axial length or thickness of 12 mm and the inner portion 3 thereof may have an axial length or thickness of 2.9 mm.. Figure 1 shows the position of ten equi-spaced curved transfer channels 4 and it will immediately be apparent that such channels 4 are spaced apart from one another at regular intervals around the longitudinal axis (axis of linear displacement) of the end cap concerned. Figure 1 also shows the positions of three holes 5 which, in use, will register with screw-threaded bores in the shell or body of the bearing or bushing. These holes 5 receive bolts by which the end cap concerned is securely fixed to the shell or body of the bearing or bushing. One of the holes 5 can also be seen in Figure 5 of the drawings and it will be apparent from the Figure that, preferably, the bolts (or screws) which are employed are cheese-head bolts or screws operable by Allen keys whereby their heads will be recessed when the bolts are tightened.

Figures 3, 4 and 5 of the drawings show principally how the illustrated metallic end cap is formed. It has been found that the necessary curved transfer channels 4 can be formed by the use of a vertical ball end or ball nose slot mill and the reference 6 that appears in Figure 5 of the drawings indicates the direction of approach of such a 3.5 mm diameter slot mill. The shapes and dispositions of the ten transfer channels 4 will be evident from Figure 1 of the drawings where two of those channels 4 are illustrated. Figure 3 shows the parabolic path cut by the slot mill and it will be noted that said path has a major axis 7 which, in the case of the example that is being described, has a 7 mm dimension whereas the minor axis 8 thereof has a 4.4 mm dimension.

As seen in Figure 4, which is a view in the direction IV in Figure 5, the major 7 mm axis is again visible and, in this case, the minor axis 8 has a dimension of 5.6 mms.

Preferably, but not absolutely essentially, the "loaded" and "unloaded" channels in the shell or body of the bearing or bushing and the transfer channels 4 in the end caps thereof all have a so-called conformity radius which is preferably 1.06 x the radius of each bearing ball that, in use will be movably accommodated therein. This arrangement allows free movement of the bearing or bushing, without significant lateral deviation, along a strictly linear path whilst substantially completely avoiding jamming.

Obviously, the slots through which the bearing balls project internally of the "loaded" channels of the body of the bearing or bushing and the similar slots which extend for short distances in the end caps thereof are significantly narrower in width than the diameters of the bearing balls themselves so that said balls cannot become lost from the channels in question through those slots when the bearing is not in surrounding relationship with a shaft or the like.

## Claims

1. A linear bearing or bushing characterised in that it comprises a shell in which is formed a plurality of "loaded" ball channels and a plurality of spaced but parallel "unloaded" or return ball channels, the bearing or bushing also comprising end caps each of which exhibits a plurality of curved transfer channels (4) interconnecting the ends of pairs of the "loaded" and "unloaded" ball channels.

2. A linear bearing or bushing according to claim 1, characterised in that said shell and each end cap are formed from metal and/or from a synthetic plastics and/or ceramic and/or cermet material.

3. A linear bearing or bushing according to claim 1 or 2, characterised in that each "loaded", each "unloaded" or return and each transfer channel has a radius which is substantially 1.06 x the radius of each bearing ball that, during the use of the linear bearing or bushing, will be movably accommodated therein.

4. A linear bearing or bushing according to any preceding claim, wherein each end cap is releasably secured to said shell by bolts which extend parallel to the longitudinal axis (axis of linear displacement) of the bearing or bushing and which bolts are entered through holes (5) formed in the end cap concerned at locations which are irregularly angularly spaced apart from one another about said axis.

5. A linear bearing or bushing according to claim 4, characterised in that each hole (5) is shaped to receive the head of a cheese-head bolt or screw.

6. A method of producing a linear bearing or bushing which involves the formation of ball channels in that bearing or bushing by the use of a ball end or ball nose slot mill.

7. A linear bearing or bushing according to any one of claims 1 to 5, characterised in that it comprises ten "loaded" channels, ten "unloaded" channels and, in each of its end caps, ten transfer channels (4).

8. A linear bearing or bushing according to any one of claims 1 to 5 or to claim 7, characterised in that each end cap of the bearing or bushings is of stepped (2,3) formation.

Fig.1.

Fig.2.

Fig.3.

Fig. 4.

Fig. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 134 603 (H. TERAMACHI)<br>* page 1, line 121 - page 2, line 127; figures 1-3 *<br>– – – | 1,2,4,5,8 | F 16 C 29/06 |
| X | CH-A-6 706 84 (SFERAX S.A.)<br>* claims 1-3; figures 2-5 *<br>– – – | 1,2 | |
| D,A | GB-A-1 574 258 (C.E. FREDERICKS)<br>* claims 1-12; figures 1,2 *<br>– – – | 7 | |
| A | US-A-4 799 803 (K. TANAKA)<br>– – – – – | | |

TECHNICAL FIELDS
SEARCHED (Int. Cl.5)

F 16 C

The present search report has been drawn up for all claims

| Place of search | Date of completion of search | Examiner |
|---|---|---|
| Berlin | 23 January 91 | HOFFMANN M.P. |